(19) Europäisches Patentamt
European Patent Office
Office européen des brevets

(11) **EP 0 955 345 A1**

(12) **EUROPEAN PATENT APPLICATION**

(43) Date of publication:
**10.11.1999 Bulletin 1999/45**

(51) Int Cl.$^6$: **C09D 5/02**

(21) Application number: **99600005.5**

(22) Date of filing: **05.05.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.05.1998 GR 98100166**

(71) Applicant: **Goumas, Nikolaos**
**Athens 17121 (GR)**

(72) Inventor: **Goumas, Nikolaos**
**Athens 17121 (GR)**

(54) **Method of forming flat/satin paints with improved scattering efficiency and lowered percentage of titanium dioxide**

(57) Compositions and method of forming compositions for flat/satin emulsion paints with improved titanium dioxide scattering efficiency are described. The improvement in scattering efficiency for a given side sheen is achieved by using calcined diatomite with a suitable pigment's mixture of adjustable mean particle size and surface morphology in an volume ratio between them of from 18/82 to 70/30. The pigment volume concentration ranges from 40% to 60%.

## Description

A method of forming flat/satin paints with lowered content and improved scattering of the contained titanium dioxide.

The present invention refers to the formulation of a combination of pigments for forming compositions of architectual paints with low side sheen, flat/satin, in order to increase the hide and lower the titanium dioxide content to the lowest level possible.

An architectual paint composition contains at least one organic binder which is used mainly for holding together the pigment particles and at the same time for adhesion on to the surface to which it is applied.

The pigments can provide to the paint various features such as color, opacity, hardness, level of gloss etc.

The aim of a successful paint composition is to lead, to a paint which achieves complete and uniform coverage of the surface it is applied on to, so that even if the substrate is not complete level and uniform, after painting it which the paint, leads to a final uniform appearance.

Recently, particular emphasis has been given to the limitation of use of Titanium dioxide, despite the fact that the latter provides maximum opacity, gloss and whiteness in a paint.

However, the use of Titanium Dioxide must be reduced for environmental reasons and furthermore, as it is particularly expensive and often not readily available due to supply shortages in the international markets.

In order to produce a white paint, different fillers are used for the composition of its pigments; in certain cases, siliceous fillers are used.

One of the above mentioned siliceous fillers is derived from the diatomaceous earth mineral, following calcination at temperatures above 800 degrees Celsius, often with the addition of certain reactants such as sodium carbonate, in a process known as FLUX CALCINATION. The flux calcined siliceous pigment produced in this manner is of an exceptional whiteness and of a high degree of porosity, whereas a large fraction (circa 60%) of the contained Silicon dioxide is in the crystalline silicon dioxide form.

Such products have been made available commercially by firms such as CELITE Corp., HEINRICH MEYER WERKE BRELOH Gmbh, UNITED MINERALS, etc.

Despite the fact that it is reported in the literature of the elementary research conducted by the manufacturers of the said diatomite (diatomaceous silica), that the replacement of part of the titanium dioxide in a paint composition with an equal volume of diatomite silica, of a mean particle size higher than 7 micrometers, does not reduce and in many cases increases the scattering power of titanium dioxide, it is however disclosed now that the proposed replacement reduces the ability of titanium dioxide particles to scatter the incident light.

It is also disclosed now that the particles of calcined diatomite silicates, due to their particular surface morphology, reduce the hiding efficiency of titanium dioxide to particularly low levels, this efficiency being expressed in the Art as SCATTERING COEFFICIENT; thus, their use - without a particular technical method - leads to a significant reduction of the hiding efficiency of titanium dioxide, unnecessary over - consumption, increase of the cost of the paint and a possible degradation of its quality and strength.

Given all the above, the need arises for the invention of a method for the recovery, to a certain extent at least, of the loss of the hiding efficiency of titanium dioxide, which is due to the use of the said calcined porous fillers, so that paints of a high degree of whiteness and brightness and a low degree of sheen are produced, featuring the maximum degree of opacity possible and a high quality and using the minimum quantity of titanium dioxide, for a given paint quality which in the Art is often defined as the ratio of the concentration of the total volume of pigments to the critical concentration of the volume of the said pigments, known as the PVC/CPVC ratio.

In order to increase the light scattering efficiency of the titanium dioxide particles in a paint, different pigments/ fillers have been developed, some of which directly contribute to the opacity of the paint. Such fillers include ultrafine fillers, lithopone, fine calcium carbonate, spherical organic synthetic capsules (voided polymers), which in a dry paint film contain trapped air and thus directly contribute to the opacity of the paint, etc.

According to the present invention a method is disclosed for the formulation of aqueous dispersion paints which feature increased opacity and a low sheen, which when measured by a suitable GLOSSMETER at an angle of 85 degrees, can provide the smallest possible readings - measures; such paints comprise water, organic binder and pigments dispersed in water, where said pigments comprise by volume, 15% - 65% and preferably 15% - 50% titanium dioxide, rutile, where said paints are characterised by that the rest of the pigments consist of particles of diatomite derived from flux calcination of the natural amorphous diatomaceous silica named hereafter FCSM and a mixture of other pigments named hereafter PM at a ratio of FCSM to PM ranging from 18/82 to 70/30 by volume.

According to the present invention, the pigment's mixture PM can comprise organic sperical microcapsules dispersed in water which can represent from 0% to 80% of the volume of the pigment's mixture.

According to the present invention the pigment's mixture PM can be replaced by one only particular pigment type.

The pigment volume concentration, PVC, may range from 40 to 60%.

The paints of the present invention are mainly produced by the dispersion of the pigments in high speed disperser which bears a central stirring shaft with a disk for achieving mixing and dispersion of pigments in the liquid paint vehicle.

By using, according to the present invention mixtures of the said calcined diatomite (FCSM) and pigment mixture of a suitable particle size distribution (PM), a composition of paint with improved opacity is achieved, such opacity being higher than that expected to be achieved by mixing two different paints formulated so that one of them contains titanium dioxide and FSCM pigments only, whereas the other contains titanium dioxide and PM pigments only.

This fact is proved by the creation of a graph of the degree of hiding (expressed as scattering coefficient) of the said two paints that are formulated so as to contain the same exactly pigment volume concentration (PVC) and the same volume concentration of titanium dioxide, compared to the volume of the non-volatile components of the paint (PVC TiO2), whereas the first of the two contains only titanium dioxide and calcined diatomite as pigments, and the other one only contains titanium dioxide and the mixture of pigments (PM). In the above calculation and graphical representation of the degree of hiding, the amount of hiding produced by the DRY HIDING effect is not accounted for, by using mobil oil to penetrate and fill the air voids, this dry hiding effect being due to the presence of air voids in the dry paint due to the lack of sufficient quantities of resin for covering all pigments and void spaces, expressed as PVC > CPVC, as already known.

If in this graph a straight line is drawn, joining the hiding power values of these two paints, then the intermediate values lying on this line represent the expected hiding power of mixtures of these two paints, according to the ratio by volume of FCSM to PM in the deriving paint mixture.

The present invention is applicable to paints where the binder is dissolved or dispersed in the aqueous phase of the paint and is particularly applicable to the water based paints for interior and exterior use where the binder consists of droplets of organic co-polymer compounds being in stable dispersion in the aqueous phase, usually with the assistance of suitable surface active substances.

The synthetic organic microcapsules referred to in the present invention are emulsified particles of a hard organic copolymer which prevents coalescence during the evaporation of the aqueous phase. Their mean particle size may range between 0.3 and 0.8 micrometers, and following evaporation of the aqueous phase, they contain trapped air and scatter the incident light creating opacity even if the said microcapsules are fully covered by the organic binder.

The particles of the calcined porous diatomite have a particle size larger mainly than two micrometers, whereas the mean particle size ranges between 4.80 and 17.00 micrometers.

The mixture of pigments (PM) may contain two or more pigments, of an individual pigment volume in the PM mixture of $V_1$, and an average particle size $M_i$, so that the volumetric mean of the average particle size of pigments in the mixture PM, called VMR, is between 0.40 and 6.50 micrometers.

The parameter VMR is calculated by the relation:

$$VMR = (V_1M_1 + V_2M_2 + V_3M3 + ....)/(V_1 + V_2 + V_3 + ....),$$

i.e.

$$VMR = \Sigma\ V_iM_i\ /\ \Sigma\ V_i$$

that is, VMR is calculated as the ratio of the sum of the products $V_i$ by $M_i$ divided by the sum of the volumes of the pigments of the PM mixture. $M_1$, $M_2$, $M_3$ are expressed in micrometers.

The average particle size is defined in the art as the diameter (or the equivalent spherical diameter), according to which, the mass of particles having diameter (or equivalent spherical diameter) smaller than it, represent half the total weight (and volume) of the pigment. Pigments are technically defined as solid paint particles which are not dissolved and are not chemically affected by the other paint components.

According to the present invention, if the particles of the calcined diatomaceous silica have a mean particle size ranging between 9.00 and 17.00 micrometers, then the volumetric mean of the PM mixture, VMR, may range between 0.40 and 6.50 micrometers, whereas if the mean particle size of the FCSM particles ranges between 4.80 and 9.000 micrometers, then the volumetric mean of the PM mixture, VMR may range between 1.40 and 3.80 micrometers, whereas the ratio of the volume of FCSM particles and the PM mixture particles may range between 20/80 and 60/40.

The binder of the paints of the present invention may be any known emulsion binder or suitable mixture thereof, preferably selected between one or several emulsion of copolymers or vinyl acetate with esters of versatic acid and/or acrylic esters, or with ethylene and vinyl chloride, or emulsions of co-polymers of acrylic esters with styrene or other acrylic esters, etc.

It is evident that small quantities of other pigments can be added to the said paints, or additives for improving their viscosity, surface tension, etc. or for the creation of special optical effects.

The paints of the present invention, when applied they provide a contitous paint film, and not like discrete droplets of paint. The titanium dioxide content of the paints of the present invention is always, by weight, greater than 11% of the total paint weight.

The present invention is also described with the use of the examples following:

**Example 1**

**Composition of aqueous dispersion paint**

| Component | Mass in kg | Volume in litters |
|---|---|---|
| Titanium dioxide, rutile | 90.00 | 22.50 |
| Lithopone, M = 0.70 μm | 98.90 | 23.00 |
| Calcium carbonate, M = 1.80 μm | 27.80 | 10.50 |
| Spherical microcapsules, M = 0.40 μm | 25.40 | 24.00 |
| Sodium Aluminosilicate, M = 0.040 μm | 9.50 | 5.00 |
| Calcined diatomite, M = 10.30 μm | 32.90 | 14.30 |
| VA-VEOVA Polymer, 50% solids | 242.60 | 229.50 |
| Additives | 30.30 | 25.90 |
| Water | 171.10 | 171.10 |
|  |  |  |
| **TOTAL** | **728.50** | **525.80** |

This paint has a pigment volume concentration, PVC, of about 48%. Titanium dioxide, rutile, represents about 22.60% by volume, of the total volume of pigments. The volume of pigments, PM is calculated as 23.00 + 10.50 + 24.00 + 5.00 = 62.50 litters. The volume of calcined diatomite (FCSM) is 14.30 litters.

The volume ratio of FCSM to PM is 18.60 / 81.40 = **14.30 / 62.50**

The Volumetric mean of the mean particle size M of the various pigments of the PM mixture is 0.716 micrometers. The average particle size of calcined diatomite is 10.30 micrometers.

The paint has high brightness, features low side sheen and smooth surface, whereas its hiding power is almost as good as that of the same paint where the quantity of calcined diatomite which is 14.30 litters, has been replaced with the same volume of PM mixture pigments, i.e. lithopone/calcium carbonate/sperical microcapsules/Sodium Aluminosilicate in a volume ratio between them of 23.00/10.50/24.00/5.00, respectively.

The titanium dioxide content of the paint is, by weight, equal to 12,45% (= 90,00 / 728,50).

**Example 2**

**Composition of paint for indoor and outdoor use**

| Component | Mass in kg | Volume in litters |
|---|---|---|
| Titanium dioxide, rutile | 134.40 | 33.60 |
| Calcium carbonate, M = 4.20 μm | 78.70 | 29.70 |
| Spherical microcapsules, M = 0.40 μm | 16.40 | 15.45 |
| Calcined diatomite, M = 12.00 μm | 48.40 | 21.20 |
| VA-VEOVA Polymer emulsion, 50% solids | 214.00 | 202.50 |
| Additives / enhancers | 25.30 | 20.30 |
| Water | 180.00 | 180.00 |

(continued)

| Component | Mass in kg | Volume in litters |
|---|---|---|
| | | |
| **TOTAL** | **697.60** | **502.75** |

This paint contains 19,26% titanium dioxide, by weight.

This paint has a pigment volume concentration, PVC, of about 51.10%. Titanium dioxide, rutile, represents about 33.60% by volume, of the total volume of pigments of the paint. The volume of calcined diatomite is 21.20 litters. The total volume of pigments, PM (calcium carbonate and spherical microcapsules) is calculated as 29.70 + 15.45 = 45.15 litters. The volume ratio of calcined diatomite (FCSM) relative to the PM mixture is about 32/68 = 21.20 / 45.15.

The volumetric mean of the average particle size M of the various pigments of the PM mixture is 2.90 micrometers (29.70 x 4.20 + 15.45 x 0.40) / (29.70 + 15.45). The average particle size of calcined diatomite is about 12 micrometers.

The colour is highly brilliant, features low sheen and a smooth surface, whereas its hiding power is almost as good as that of the same paint where the quantity of calcined diatomite which is 21.20 litters, has been replaced with a same volume of PM mixture pigments, i.e. calcium carbonate / spherical microcapsules in a volume ratio between them of 29.70/15.45.

In the above examples:

1. The lithopone pigment used has a 30% ZnS content and is supplied by SACHTLEBEN CHEMIE.

2. The calcium carbonate of average particle size of 1.80 micrometers and 4.20 micrometers respectively are the IOKAL 5C and IOKAL No 10 grades made by IONIAN KALK S.A.

3. The spherical microcapsules used were derived from the ROPAQUE OP - 62 product manufactured by ROHM and HAAS. Similarly, the product ROPAQUE OP - 96 may be used, having an average particle size of 0.50 micrometers.

4. The calcined diatomite used was the KS - 33 product manufactured by HEINRICH MEYER - WERKE BRELOH GMBH in example 1 and a mixture of the CELITE 499 and CELATOM MW - 25 products manufactured by CELITE and UNITED MINERALS respectively, in example 2. Alternatively, products CELATOM MW - 27, SUPER FLOSS, CELITE 281, PF - 5, KS - 2M, etc. may be used.

5. The emulsion binder VA-VEOVA used was the RAMEVUL PC-2 grade manufactured by VIVAVIL Spa.

6. The additives or enhancers used are additives used in the aqueous paint industry and consist of thickeners, anti-foam agents, wetting agents, foam destroyers, pH adjusters, coalescing agents, etc. The above do not form part of this invention.

If, in the paints of the above method, crystalline natural calcium carbonate is used in place of amorphous calcium carbonate, having the same particle size distribution (like the products known in GREECE under the trade name MICROBLANC) then a lowered side sheen is achieved, without any hiding power loss. The pigments IOKAL 5 C and IOKAL No 10, used in the examples about, are natural amorphous calcium carbonates.

The mentioned replacement proves that the use of crystalline calcium carbonate for achieving a paint composition showing a given side sheen (at 85°), leads to composition with lowered amount of used calcined diatomite and as a result, to higher titanium dioxide scattering efficiency and lowered cost of the paint. Such pigments known in the art are talks, calcined kaolinites, like the under the trade name OPTIWHITE known pigments etc.

On the contrary, the use of voided organic spherical microcapsules or fine blanc fixe or lithopone, although improves the scattering efficiency of titanium dioxide, does not reduce significaly the side sheen (at 85°) of the paint, so that to face a serious problem when a high quality paint is going to be formulated, having a side sheen at 85° lower than 4,50.

Suitable combinations of fine, low oil absorption pigments, like lithopone or ROPAQUE OP-96 etc, with calcined diatomite pigment, in the volume ratios and average particle sizes and volumetric means VMR of the present invention, in relation to the recognized problem of the serious reduction in scattering efficiency of titanium dioxide which is due to the use of calcined diatomite, teaches and leads to the formulation of compositions having the lowest possible amount of calcined diatomite, for achieving a given quality and a given side sheen at 85°.

The percentages of each pigment selected, are depended on the relative cost of each pigment and on the cost and availability of titanium dioxide.

**Comparison with the state of the art:** On addition to the refered state of the art in the first pages 1 and 2, a comparison of the above results with the state of the art is made, by reference to the following documents:

(D - I):      GB - A - 1 015 704 / 05-01-1966
(D - II):     Technical brosure: «DIATOMITE FILLERS» of a major diatomite producer.
(D - III):    EP 0773 266 A2 / 14-05-1997

According to document (D - I), from page 2, lines 27-36, it is proved now the prejudice that diatomaceous silica can replace titanium dioxide without changing the hiding power or quality of the paint, as it is understood by the statement «... over **the conventional titanium dioxide extender, diatomaceous silica,** in a PVA copolymer emulsion paint».

From document (D - II), it is finded out the prejudice that calcined diatomaceous silica can replace («extend») more expensive extenders and pigments, like titanium dioxide, without any quality or hiding power sacrifice.

The development of two compositions of paint, according to the present invention, with the same titanium dioxide volume concentration (PVC $T_iO_2$) and with a diatomite volume concentration of the first one of them, which is equal to the volume concentration of the pigment's mixture of the other one, and the graphical presentation of the scattering efficiency of titanium dioxide of the various blends of the above two main compositions, discloses that the replacement of one or more fine extenders, (expressed as «pigment's mixture PM») with equal volume of calcined diatomite, results in reduction of the scattering efficiency of Titanium dioxide.

As a result, the side sheen at 85° of the blended paints follows the same reduction.

From the above it is proved that, for major reasons, the replacement of fine titanium dioxide with calcined diatomaceous silica, reduce the hiding efficiency of titanium dioxide.

As a result, the observed in some cases, improvement in contrast ratio when fine pigments or titanium dioxide is replaced with equal volume of calcined diatomite, is due to the development of higher values of dry hiding i.e. the development of more air voids in the dry film.

As it is known, the recognition of an unrecognized problem in the art and the removal of an prejudice, can be the base of an invention.

In document (D - III), the disclosed paints in page 3, lines 3-54, contain titanium dioxide less or equal to 10% of the paint either by weight or by volume concentration (PVC $T_iO_2$), and the pigment volume concentration of these paints is always greater than 68%. This document, on the other hand, is completely silent on the scattering efficiency of titanium dioxide and the effect of the extenders on this scattering efficiency.

Mention of a trade name, with the only description «silica filler» in this document, does not define calcined diatomaceous silica, which is the subject of the present invention, and it is defined precisely in the examples above.

According to the present invention, it is teached that the gradual replacement of pigment's mixture PM, with equal volume of calcined diatomite, in order to achieve a lower, given, side sheen (at 85°), results in a reduction of $T_iO_2$ scattering efficiency, when the average particle size of the used calcined diatomite is greater than **7 $\mu$m** and the volumetric mean VMR of the pigment's mixture PM is lower than **6,50 $\mu$m**. This effect is more pronounced when the volume ratio of calcined diatomite to pigment's mixture PM is lower than 20/80.

Formulating compositions with suitable selection of each pigment, of the pigments PM, as its surface morphology is concerned, and adjusting the volumetric mean VMR in values smaller than 3,00 $\mu$m, it is possible to achieve paints with a 85° side sheen lower than 5,00 , by using adjustable, low, quantity of calcined diatomite, in a volume ratio between them, FCSM/PM lower than 20/80. This results to improved scattering efficiency of titanium dioxide at low side sheen paint.

In the above example 1 of the present invention, the paint exhibits a 85° side sheen smaller than 4,00 , the volume ratio of FCSM/PM is equal to : 18,60/81,40 and the volumetric mean VMR is equal to 0,716 $\mu$m.

The measurement of side sheen is made by applying the wet paint on a sealed LENETA card, using a 200 $\mu$m gap film applicator, and after one week drying at room conditions.

The wet and dry paint film thickness is depended on the viscosity and volume solids of the paint.

The possible dry hiding is eliminated by penetrating mobil oil in the dry paint film.

## Claims

1.   A method of forming a composition, particularly suitable for use as an architectural flat/satin emulsion paint composition, for interior and/or exterior use with improved scattering at lowered titanium dioxide content, said composition comprising water, various improving or adjusting additives. at least one organic resin binder and pigments in a amount providing a pigments volume concentration, PVC, of from 40% to 60%, said pigments consisting of Titanium dioxide, rutile, which represents, by volume, 15% to 65% and preferably 15% to 50% of the total pigment volume and by weight at least 11% of the total paint weight, the remaining quantity of pigments is consisting of:

     **(A)** particles of calcined diatomite silica, named herein as FCSM and

**(B)** particles of two or more pigments, named herein as PM, at a ratio between them, FCSM/PM, ranging from 18/82 to 70/30, by volume.

The average particle size of the used calcined diatomaceous silica pigment can range between 9 μm and 17 μm, and the used particles of the pigment mixture PM have a volumetric mean of the average particle sizes of the pigment of PM, named herein as VMR, ranging from 0,40 μm to 6,50 μm.

The value of **VMR** is calculated from the equation $\mathbf{VMR} = (V_i \cdot M1 + V_2 \cdot M_2 + V_3 \cdot M_3 + ...) / (V_1 + V_2 + V_3 + ...)$ or $VMR = (\Sigma \, V_i \cdot M_i) / \Sigma V_i$ , where $V_i$ , $V_2$ , $V_3$ , ... are the volumes of each of the pigments of the pigment mixture PM, and $M_1$ , $M_2$ , $M_3$ ... are the corresponding average particle sizes of them, expressed as μm.

2. The method of claim 1 wherein said pigment volume concentration, PVC, ranged from 45% to 55% and said titanium dioxide represents 25% to 50% of the total pigment volume.

3. Use of calcined diatomaceous silica pigment having an average particle size from 9,00 μm to 17,00 μm for forming a composition of an architectural emulsion paint with improved titanium dioxide scattering efficiency and lowered content of it, with a 85° sheen less than 5,50 , measured on a dry paint film having a unvarying thickness greater than 30 μm and lower than 80 μm, said composition comprising also one or more pigments PM, in amount providing a pigment volume concentration, PVC, of from 40% to 60% and:

**(1)** titanium dioxide represents by weight, at least 11% of the paint and by volume represents from 15% to 50% of the volume of the total pigments of the paint.
**(2)** diatomaceous silica represents, by volume, from 18% to 60% of the volume of the total pigments of the paint, where titanium dioxide is not calculated in the sum.
**(3)** the volumetric mean of the average particle sizes of the pigment mixture PM, as it is defined in claim 1, is from, 0,40 μm to 6,50 μm.

4. A method of forming a composition of an architectural emulsion paint, having a 85° sheen less than 5,00 , measured on an dry unvarying paint film, having a thickness less than 80 μm and more than 30 μm, with improved titanium dioxide scattering efficiency, characterized by that said composition comprise at least one organic binder and pigments in an amount providing a pigment volume concentration of from 40% to 60%, said pigments comprising titanium dioxide, which represents 15% to 65% of the volume of the total pigment of the paint, the remained amount of pigments consisted of diatomaceous silica pigment particles, having an average particle size of more than 7 μm (FCSM) and of pigments (PM) in an volume ratio between them FCSM/PM from 5/95 to 20/80. The volumetric mean VMR of the pigments PM, as it is defined in claim 1, is from 0,10 μm to 3,00 μm.

5. An architectural emulsion paint, flat/satin, particularly suitable for painting interior and/or exterior walls, with improved scattering efficiency at lowered content of the titanium dioxide, characterized by that said paint comprise water, various improving or adjusting additives, at least one organic resinous binder and pigments in an amount providing a pigment volume concentration, PVC, of from 40% to 60%. Said pigments consisting of titanium dioxide, rutile, representing by volume 15% to 65% and preferably 15% to 50% of the volume of all pigments of the paint and by weight at least 11% of the total paint weight, the remained amount of pigments consisting of: **(A)** particles of calcined diatomite (FCSM) and **(B)** particles of two or more pigments (PM), in a ratio between them FCSM/PM, by volume, from 18/82 to 70/30. The used calcined diatomite pigment has an average particle size from 9 μm to 17 μm, and the pigments of the pigment mixture PM have an volumetric mean VMR of from 0,40 μm to 6,50 μm. The value of VMR is calculated from the equation which is defined in claim 1.

6. A method according to claim 1 or 2 or 4 or a use according to claim 3, wherein the titanium dioxide weight, rutile, represents from 14% to 45% of the total paint weight.

7. A method according to claim 1 or 2 or 4 or 6 wherein the pigment mixture PM comprise, by volume:

**a.** from 0% to 100% particles of calcium carbonate and/or
**b.** from 0% to 100% opaque polymer particles having an average particle size of from 0,40 μm to 0.80 μm, and/or
**c.** from 0% to 100% particles of lithopome pigment, having an average particle size less than 1,50 μm.

8. A paint according to claim 5, wherein its composition is a composition as defined in any one of claims 2 to 7.

9. A method for producing a white flat building surface, characterized by that it is applied on to surface by means of brush and/or roller, a paint which composition is a composition as defined in any one of claims 1 to 8, said paint showing a 85° sheen, less than 4,50 , measured on a dry paint film of unvarying thickness between 30 and 80 μm.

10. An Architectural surface painted with a paint, according to any of claims 8 or 9.

**European Patent Office**

## EUROPEAN SEARCH REPORT

Application Number

EP 99 60 0005

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | EP 0 773 266 A (ARMSTRONG WORLD IND INC) 14 May 1997 (1997-05-14) * page 2, line 52 - line 57 * * page 3, line 30 - line 55 * | 1 | C09D5/02 |
| A,D | GB 1 015 704 A (J.M. HUBER CORPORATION) 5 January 1966 (1966-01-05) * tables 1-4 * | 1 | |
| A | US 4 749 731 A (KYMINAS STANLEY C ET AL) 7 June 1988 (1988-06-07) * column 1, line 65 - column 2, line 15 * * column 5, line 46 - line 60 * | 1 | |
| A | US 4 800 107 A (WICKERT FRANK A) 24 January 1989 (1989-01-24) * column 1, line 60 - line 65 * * column 3, line 36 - column 4, line 31 * * column 5, line 2 - line 15 * * column 5, line 49 - line 59 * | 1 | TECHNICAL FIELDS SEARCHED (Int.Cl.6) C09D |

The present search report has been drawn up for all claims

| Place of search | Date of completion of the search | Examiner |
|---|---|---|
| THE HAGUE | 21 July 1999 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 60 0005

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-1999

| Patent document cited in search report | | Publication date | Patent family member(s) | | Publication date |
|---|---|---|---|---|---|
| EP 0773266 | A | 14-05-1997 | US 5874161 | A | 23-02-1999 |
| | | | BR 9605506 | A | 11-08-1998 |
| | | | CA 2189519 | A | 10-05-1997 |
| | | | DE 69601300 | D | 18-02-1999 |
| | | | DE 69601300 | T | 27-05-1999 |
| | | | GB 2306967 | A | 14-05-1997 |
| | | | NO 964704 | A | 12-05-1997 |
| GB 1015704 | A | | US 3509082 | A | 28-04-1970 |
| US 4749731 | A | 07-06-1988 | US 4859723 | A | 22-08-1989 |
| US 4800107 | A | 24-01-1989 | AT 98284 | T | 15-12-1993 |
| | | | AU 2362388 | A | 20-04-1989 |
| | | | DE 3886166 | D | 20-01-1994 |
| | | | DE 3886166 | T | 23-06-1994 |
| | | | EP 0312334 | A | 19-04-1989 |

EPO FORM P0459

For more details about this annex : see Official Journal of the European Patent Office, No. 12/82